# EUROPÄISCHE PATENTSCHRIFT

(11) **EP 2 193 073 B1**
(45) Veröffentlichungstag und Bekanntmachung des Hinweises auf die Patenterteilung: **04.05.2011**
(21) Anmeldenummer: 07847913.6
(22) Anmeldetag: 06.12.2007
(51) Int. Cl.: B63H 5/125

(54) **VERFAHREN ZUR STEUERUNG EINES OBERFLÄCHENANTRIEBS FÜR EIN WASSERFAHRZEUG IM OBEREN GESCHWINDIGKEITSBEREICH**
METHOD FOR CONTROLLING A SURFACE DRIVE FOR A WATERCRAFT IN THE UPPER SPEED RANGE
PROCEDE DE COMMANDE D'UNE PROPULSION DE SURFACE D'UN BATEAU DANS LA PLAGE DE VITESSES SUPERIEURE

(30) Priorität: 05.10.2007 DE 102007048063
(43) Veröffentlichungstag der Anmeldung: 09.06.2010
(73) Patentinhaber: ZF Friedrichshafen AG, 88038 Friedrichshafen (DE)
(72) Erfinder: CHIECCHI, Andrea, I-37129 Verona (IT)
(74) Vertreter: Paul, Andreas
(86) Internationale Anmeldenummer: PCT/EP2007/063438
(87) Internationale Veröffentlichungsnummer: WO 2009/046769

(56) Entgegenhaltungen:
- WO-A-99/22989
- US-A- 4 544 362

## Beschreibung

Die Erfindung betrifft ein Verfahren zur Steuerung eines Oberflächenantriebs für ein Wasserfahrzeug nach dem Oberbegriff von Anspruch 1, beispielsweise bekannt aus der US 4,544,362.

Bei schnellen motorgetriebenen Wasserfahrzeugen die mit einem Oberflächenantrieb versehen sind, ist die Propellerwelle um einen Gelenkpunkt mit der vom Motor oder dem Getriebe kommenden Antriebswelle in alle Richtungen schwenkbar. Motor und Getriebe befinden sich im Schiffsrumpf. Bei einer Schwenkung der Propellerwelle in einer senkrechten, parallel zur Längsachse des Wasserfahrzeugs angeordneten Ebene wird die Eintauchtiefe des Propellers und damit sowohl die Umsetzung von Antriebsenergie in Schubkraft verändert als auch die Lage der Längsachse des Rumpfes im Wasser bezogen auf die Horizontale beeinflusst. Diese Schwenkung der Propellerwelle in der senkrechten Ebene bezeichnet man als Trimmung, das Maß der Schwenkung als Trimmwinkel. Bei höheren Geschwindigkeiten und nur teilweise eingetauchtem Propeller erreicht der Oberflächenantrieb seinen besten Wirkungsgrad. Der optimale Trimmwinkel ist somit abhängig von der Geschwindigkeit des Wasserfahrzeugs und wird bei herkömmlichen Wasserfahrzeugen mit der entsprechenden Ungenauigkeit manuell vorgenommen. In Näherung verhält sich die Geschwindigkeit des Wasserfahrzeugs proportional zur Drehzahl der Propellerwelle oder hierzu proportionalen Drehzahlen des Antriebs. Bei Ausführungen mit mehreren Antriebseinheiten, welche jeweils von einem eigenen Motor angetrieben werden, ist es aufgrund von Abweichungen in den Motorkennlinien und Fertigungstoleranzen der Propeller nicht möglich, eine identische Drehzahl für den Fahrbereich in dem das Wasserfahrzeug seine Höchstgeschwindigkeit erreicht, einzustellen. Aus diesem Grund ist eine unabhängige Veränderung der Eintauchtiefe zur Angleichung der für die Höchstgeschwindigkeit definierten Drehzahlen erforderlich, da sich so das Moment des Antriebs ändert und damit seinen Drehzahl. Darüber hinaus belastet die manuelle Trimmung den Schiffsführer zusätzlich zu seinen anderen Aufgaben, was ebenfalls eine optimale Einstellung des Trimmwinkels erschwert.

In dem Stand der Technik ist eine automatische Trimmsteuerung für einen Oberflächenantrieb beschrieben, welche den Trimmwinkel selbsttätig in Abhängigkeit des jeweiligen Fahrbereichs verstellt. Die Fahrbereiche sind hierbei durch die Lage, welche das Wasserfahrzeug bei unterschiedlichen Geschwindigkeiten im Wasser einnimmt, definiert.

Die der Erfindung zugrunde liegende Aufgabe ist es, ein Verfahren zur optimierten selbsttätigen Einstellung des Trimmwinkels eines Oberflächenantriebs für ein Wasserfahrzeug für den Fahrbereich, in welchem das Wasserfahrzeug seine Höchstgeschwindigkeit erreicht, anzugeben.

Diese Aufgabe wird durch die Merkmale des Patentanspruches 1 gelöst.

Ein Oberflächenantrieb für ein Wasserfahrzeug besteht aus mindestens zwei Antriebseinheiten, in welchen jeweils eine Propellerwelle mit Propeller in einem Schubrohr geführt ist. Das Schubrohr ist in einem Gelenkpunkt am Heck des Wasserfahrzeugs schwenkbar befestigt und die Propellerwelle ist in dem Gelenkpunkt mit einer Antriebswelle gelenkig verbunden. Die Antriebswelle wird entweder direkt von einem im Inneren eines Rumpfes des Wasserfahrzeugs angeordneten Motor angetrieben oder ist der Ausgang eines dem Motor nachgeschalteten Getriebes. Jede Antriebseinheit wird von einem eigenen Motor angetrieben. Die Schwenkung des Schubrohres, und damit der Propellerwelle, in einer senkrechten Ebene parallel zur Längsachse des Wasserfahrzeugs bezeichnet man als Trimmung, wobei der Trimmwinkel als Maß für die Schwenkung von einer oberen und unteren Trimmgrenze begrenzt wird. Mit der Trimmbewegung wird die Eintauchtiefe des Propellers eingestellt. Mit einer Schwenkung des Schubrohres in der horizontalen Ebene wird die Fahrtrichtung des Wasserfahrzeugs gesteuert, wobei das Maß für diese Schwenkung der Steuerwinkel ist, welcher sich zwischen einem linken und einem rechten maximalen Steuerwinkel bewegt. Zur Ausführung der Schwenkbewegungen in den beiden Ebenen wird das Schubrohr von einer Trimm- und einer Steueraktuatorik betätigt, wobei diese wiederum von einer elektronischen Steuerungseinheit angesteuert werden. Der Oberflächenantrieb wird in mindestens zwei unterschiedlichen Fahrbereichen betrieben, wobei in einem Fahrbereich die Höchstgeschwindigkeit des Wasserfahrzeugs erreicht wird. In diesem Fahrbereich werden die Trimmwinkel der Antriebseinheiten selbsttätig und unabhängig voneinander verstellt, so dass sich an jeder Antriebseinheit eine definierte Drehzahl einstellt, bei welcher das Wasserfahrzeug seine Höchstgeschwindigkeit erreicht. Die selbsttätige Veränderung des Trimmwinkels wird nachfolgend auch als automatische Trimmung bezeichnet, die je nach Fahrbereich unterschiedliche Art und Weise als Trimmmodus.

Der Vorteil einer unabhängigen Verstellung der Trimmwinkel bei mehreren Antriebseinheiten in dem Fahrbereich in welchem die Höchstgeschwindigkeit des Wasserfahrzeugs erreicht wird, ist die Möglichkeit die definierte Drehzahl, welche zum Erreichen der Höchstgeschwindigkeit erforderlich ist, einheitlich an jeder Antriebseinheit einzustellen. Die unabhängige, individuelle Einstellung des jeweiligen Trimmwinkels kompensiert damit Toleranzen hinsichtlich der Propellerabmessungen oder der Leistungskennlinien der Motoren. Zudem wird der Schiffsführer von der Einstellung der Trimmwinkel entlastet.

Vorteilhafte Ausgestaltungen der Erfindung ergeben sich aus den Unteransprüchen.

In einer vorteilhaften Ausgestaltung der Erfindung werden in dem Fahrbereich, in welchem die Höchstgeschwindigkeit des Wasserfahrzeugs erreicht wird, die Trimmwinkel der einzelnen Antriebseinheiten selbsttätig in einem geschlossenen Regelkreis unabhängig voneinander so geregelt, dass sich an den Antriebseinheiten die jeweilige definierte Drehzahl einstellt.

Alternativ kann selbsttätig bei jeder Antriebseinheit, unabhängig von den anderen Antriebseinheiten, ein im Voraus bestimmter Trimmwinkel eingestellt werden, bei welchem an der jeweiligen Antriebseinheit die definierte Drehzahl erreicht wird. Der im Voraus bestimmte Trimmwinkel wurde beispielsweise durch Versuche ermittelt.

Zusätzlich ist es möglich, dass in einem gesteuerten Fahrbereich, in welchem nicht die Höchstgeschwindigkeit erreicht wird, der in Abhängigkeit von einer Drehzahl oder einer Geschwindigkeit einzustellende Trimmwinkel einer, in der elektronischen Steuerungseinheit abgelegten, Wertetabelle oder Kennlinie entnommen wird. Zwischenwerte werden interpoliert. Als Alternative zu der Wertetabelle oder Kennlinie kann der Trimmwinkel aus einer Funktion errechnet werden, die in der elektronischen Steuerungseinheit gespeichert ist.

Es ist außerdem möglich, im Betrieb eingestellte Trimmwinkel und, beim Vorhandensein von Trimmklappen, Trimmklappenwinkel in einer lernenden Betriebsart abzuspeichern und hierdurch eine Kennlinie oder Wertetabelle zu erzeugen.

Außerdem kann gemäß einer Weiterbildung der Erfindung vorgesehen sein, dass, neben dem Fahrbereich, in welchem das Wasserfahrzeug die Höchstgeschwindigkeit erreicht, ab einer ersten Drehzahlgrenze, welche durch die Leerlaufdrehzahl des Motors gegeben ist, ein Langsamfahrt-Bereich für Langsamfahrt vorgesehen ist, in dem die selbsttätige Einstellung des Trimmwinkels passiv ist. Dies bedeutet, dass der Trimmwinkel manuell vom Bootsführer innerhalb des Trimmbereichs beliebig eingestellt werden kann, aber die elektronische Steuerungseinheit ständig die Drehzahlen erfasst und bei Verlassen des Langsamfahrt-Bereichs die entsprechende selbsttätige Betriebsart für den darauffolgenden Fahrbereich aktiviert.

In diesem Zusammenhang sieht eine weitere Ausgestaltungsform vor, dass der Oberflächenantrieb in vier Fahrbereichen betrieben wird, wobei mit der Erhöhung der Drehzahl nach dem Langsamfahrt-Bereich ab der zweiten Drehzahlgrenze ein zweiter Fahrbereich, ab einer dritten Drehzahlgrenze ein dritter Fahrbereich und ab einer vierten Drehzahlgrenze ein vierter Fahrbereich folgt. Hierbei erfolgt die automatische Trimmung in dem zweiten Fahrbereich und dem dritten Fahrbereich in der Weise einer Steuerung, das heißt einer Ausgabe von Einstellwerten ohne Rückmeldung. Der vierte Fahrbereich ist jener Fahrbereich, in welchem die Höchstgeschwindigkeit des Wasserfahrzeugs erreicht wird.

Zusätzlich kann vorgesehen sein, dass im Langsamfahrt-Bereich, dem zweiten und dem dritten Fahrbereich die Trimmwinkel der einzelnen Antriebseinheiten synchron verstellt werden, das heißt die Verstellung erfolgt für alle Antriebseinheiten einheitlich um den gleichen Winkel in der gleichen Richtung. Der Mittelwert der Drehzahlen der einzelnen Antriebseinheiten dient als Drehzahlsignal, anhand dessen der Trimmwinkel aus einer Wertetabelle oder anhand einer Funktion in der elektronischen Steuerungseinheit bestimmt wird.

In einer alternativen Variante werden bei einem Wasserfahrzeug, welches auf der linken und rechten Seite des Heckspiegels mindestens jeweils eine Trimmklappe aufweist, die Trimmklappen links und rechts in der automatischen Betriebsart synchron um einen gleichen Trimmklappenwinkel in der gleichen Richtung zwischen einem oberen und einem unteren Trimmklappen-Grenzwinkel verstellt.

In diesem Zusammenhang ist bei einer weiteren Ausgestaltungsform vorgesehen, dass in dem Fahrbereich in welchem die Höchstgeschwindigkeit des Wasserfahrzeugs erreicht wird, durch die elektronische Steuerungseinheit selbsttätig ein im Voraus bestimmter Trimmklappenwinkel eingestellt wird, bei welchem vorzugsweise der durch einen Rumpf des Wasserfahrzeugs der Fahrbewegung entgegen gerichtete Widerstand am geringsten ist.

In einer alternativen Ausführung wird in dem Fahrbereich in welchem die Höchstgeschwindigkeit des Wasserfahrzeugs erreicht wird, der Trimmklappenwinkel in einem geschlossenen Regelkreis selbsttätig so eingestellt, dass die Geschwindigkeit des Wasserfahrzeugs maximal ist.

Ein Ausführungsbeispiel der Erfindung ist in der Zeichnung dargestellt und wird im Folgenden näher beschrieben.

Es zeigen
- Fig. 1: eine schematische Darstellung der Seitenansicht eines Wasserfahrzeugs mit einem Oberflächenantrieb
- Fig. 2: ein Ablaufdiagramm für das selbsttätige Wechseln des Trimmmodus
- Fig. 3: ein Diagramm mit dem Verlauf des Trimmwinkels über der Drehzahl
- Fig. 4: ein Ablaufdiagramm zur Steuerung des Trimmwinkels in einem Fahrbereich in welchem nicht die Höchstgeschwindigkeit des Wasserfahrzeugs erreicht wird
- Fig. 5: ein Ablaufdiagramm zur Steuerung des Trimmwinkels in einem Fahrbereich in welchem die Höchstgeschwindigkeit des Wasserfahrzeugs erreicht wird, und
- Fig. 6: ein Ablaufdiagramm zur Regelung des Trimmwinkels in einem Fahrbereich in welchem die Höchstgeschwindigkeit des Wasserfahrzeugs erreicht wird.

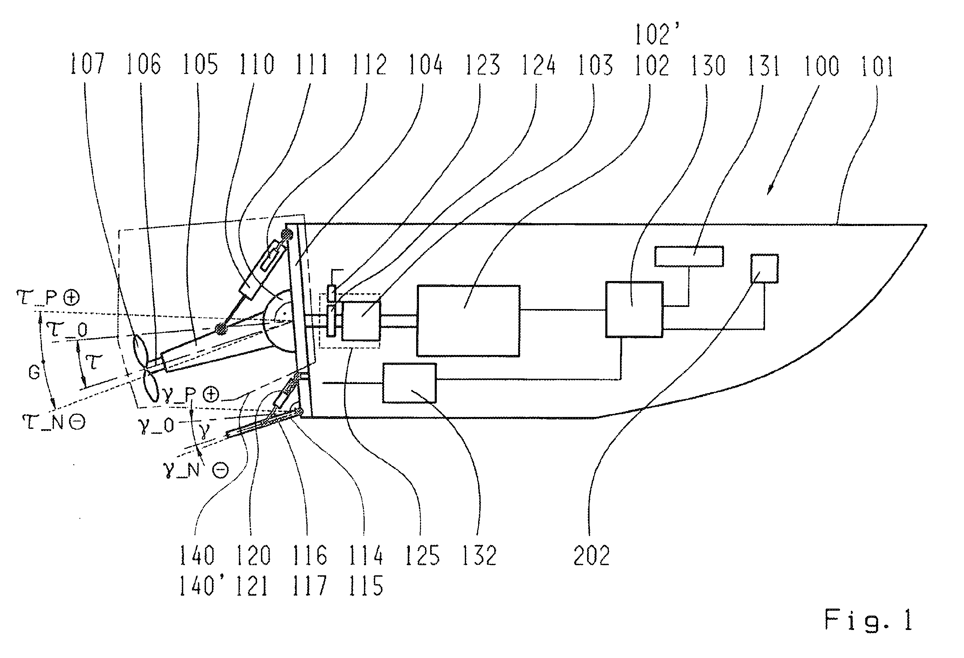

Fig. 1 zeigt die schematische Darstellung eines Wasserfahrzeugs 100 mit einem Oberflächenantrieb in der Seitenansicht. Die Antriebseinheit 140 des Oberflächenantriebs ist heckseitig am Rumpf 101 des Wasserfahrzeugs 100 angeordnet und mit dem Heckspiegel 104 verbunden. Die Antriebseinheit 140 besteht aus dem Schubrohr 105 mit der Propellerwelle 106 und dem Propeller 107 sowie der Trimmaktuatorik, welche sich aus einem Hydraulikzylinder 110 und einem Hubsensor 112 zusammensetzt. In dem Schubrohr 105 ist mittig die Propellerwelle 106, an deren heckseitigem Ende der Propeller 107 befestigt ist, drehbar gelagert. In dem Gelenkpunkt 111 ist das Schubrohr 105 mit dem Heckspiegel 104 und die Propellerwelle 106 mit der Antriebwelle 125, die von einem dem Motor 102 nachgeschalteten Getriebe 103 ausgeht, verbunden und schwenkbar gelagert. Die Drehzahl n wird beispielsweise von einem Drehzahlsensor 123 an einer Schlitzscheibe 124 gemessen, dessen Signal von der elektronischen Steuerungseinheit 130 erfasst wird. Die Schwenkbewegung der Antriebseinheit 140 in vertikaler Ebene, auch als Trimmbewegung bezeichnet, wird von der Trimmaktuatorik 110, 112 bewirkt. Dir Trimmbewegung wird von der elektronischen Steuerungseinheit 130 ausgelöst, welche die Trimmaktuatorik über eine zentrale Hydraulikeinheit 132 ansteuert. Das Maß für die Trimmbewegung der Antriebseinheit 140 ist der Trimmwinkel τ. Die Trimmbewegung erfolgt innerhalb eines als Trimmbereich τ_G bezeichneten, durch eine obere Trimmgrenze τ_P und eine untere Trimmgrenze τ_N begrenzten, Winkels. Die neutrale Trimmlage τ_0, welche beispielsweise mit τ_0 = 0° definiert ist, ist durch die Senkrechte auf den Heckspiegel 104 gegeben. Zusätzlich sind zur Trimmung des Wasserfahrzeugs 100 rechts und links am Heckspiegel 104 zwei Trimmklappen 114 und 115 angebracht, die von jeweils einem Trimmklappenzylinder 116 und 117 betätigt werden. Die Ansteuerung der Trimmklappenzylinder 116 und 117 erfolgt ebenfalls von der elektronischen Steuerungseinheit 130 aus über die zentrale Hydraulikeinheit 132. Die Trimmklappen 114 und 115 werden in der automatischen Betriebsart synchron miteinander verstellt, so dass die Trimmklappenwinkel rechts und links immer gleich sind und mit einem gemeinsamen Trimmklappenwinkel γ bezeichnet werden. Hierbei ist die Bewegung der Trimmklappen 114 und 115 von einem oberen Trimmklappen-Grenzwinkel γ_P und einem unteren Trimmklappen-Grenzwinkel γ_N begrenzt. Dazwischen befindet sich die neutrale Lage γ_0, welche wie beim Trimmwinkel τ durch die Senkrechte zum Heckspiegel 104 gegeben ist. Die Trimmklappenbewegung wird mit jeweils einem in den Trimmklappenzylindern 116 und 117 angeordneten Wegsensor 120 und 121 gemessen und in der elektronischen Steuerungseinheit 130 erfasst, bzw. wie alle gemessenen Größen auf dem Bedienpult 131 angezeigt.

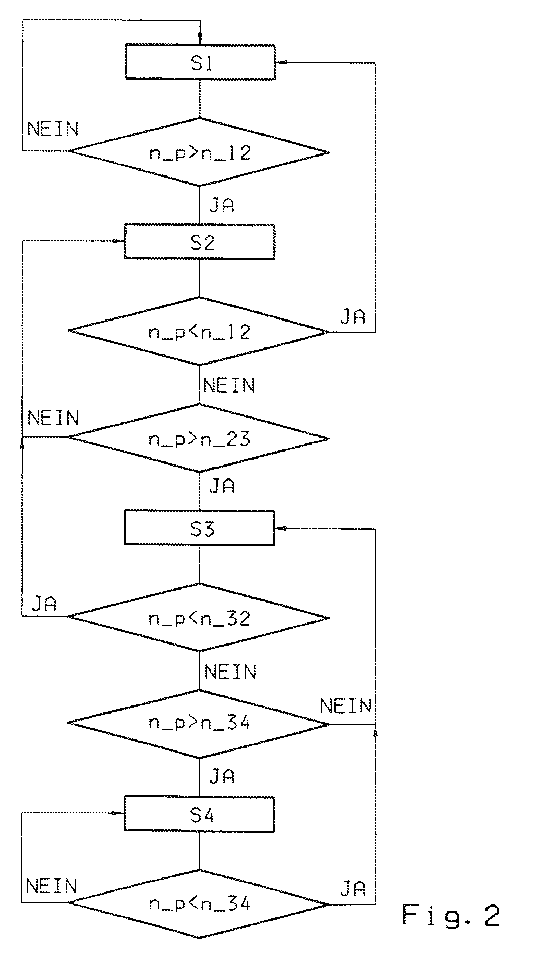

In Fig. 2 ist anhand eines Ablaufdiagramms der selbsttätige Wechsel des Trimmmodus in Abhängigkeit von der als Maß für die Geschwindigkeit dienenden Drehzahl n, und damit der Fahrbereiche, dargestellt. Die Drehzahlen des Motors 102, der Antriebswelle 125 und der Propellerwelle 106 stehen augrund der festen Übersetzungsstufe und der schlupffreien Übertragung des Getriebes 103 in einem proportionalen Verhältnis zueinander, so dass unter Berücksichtigung der Messstelle Motor, Getriebe oder Propellerwelle in der elektronischen Steuerungseinheit 130 die Drehzahl n erfasst wird. Als Drehzahlmesseinrichtung wird beispielsweise ein Drehzahlsensor 123 im Zusammenwirken mit einer Schlitzscheibe 124 oder die Information aus einer Motorsteuerung verwendet. In dem Langsamfahrt-Bereich S1 steigert sich bei beschleunigter Fahrt die Drehzahl n von der durch die Leerlaufdrehzahl des Motors gegeben Anfangsdrehzahl n_11. Im Langsamfahrt-Bereich S1 wird das Wasserfahrzeug beispielsweise manövriert, wie dies bei An- und Ablegemanövern erforderlich ist. In der elektronischen Steuerungseinheit 130 wird die aktuelle Drehzahl n mit einer in die elektronischen Steuerungseinheit 130 einprogrammierte Drehzahlgrenze n_12 aus einer gespeicherten Wertetabelle 133 oder Kurvenfunktion verglichen. Ist der Wert der aktuellen Drehzahl n größer als jener der Drehzahlgrenze n_12, so wechselt die automatische Trimmsteuerung in einen zweiten Fahrbereich S2 und der aktuelle, für den Fahrbereich S2 in der Wertetabelle 133 zugeordnete, Trimmwinkel τ wird ermittelt. Dieser verlässt dann als Ausgangssignal die elektronische Steuerungseinheit 130 zur zentralen Hydraulikeinheit 132, welche die Trimmaktuatorik 110, 112 betätigt und die Antriebseinheit 140 auf den dem Fahrbereich entsprechenden Trimmwinkel τ verstellt. Der zweite Fahrbereich S2 ist bei einer beschleunigten Fahrt nur ein vorübergehender Fahrbereich, in welchem die Trimmung den Übergang in einen dritten Fahrbereich S3 ermöglicht. Sinkt die Drehzahl im Fahrbereich S2 wieder unterhalb von n_12, so kehrt die automatische Trimmsteuerung in den Langsamfahrt-Bereich S1 zurück. Bei einer Drehzahlsteigerung im Fahrbereich S2 und einer Überschreitung einer Drehzahlgrenze n_23 wird in der elektronischen Steuerungseinheit 130 die Betriebsart für den dritten Fahrbereich S3 aktiviert. S3 ist der Hauptfahrbereich des Wasserfahrzeugs mit Oberflächenantrieb, wobei hier auch beispielsweise der höchste Wirkungsgrad des Motors 102 oder des Propellers 104 erreicht wird. Wird im Fahrbereich S3 die Drehzahl n wieder reduziert und sinkt unter eine Drehzahlgrenze n_32, welche geringer ist als n_23, kehrt die automatische Trimmung in den Modus für den Fahrbereich S2 zurück. Wird bei einer weiteren Beschleunigung im Fahrbereich S3 eine Drehzahlgrenze n_34 überschritten, so wird in der elektronischen Steuerungseinheit 130 der Trimmmodus für den vierten Fahrbereich S4 aktiviert. In dem vierten Fahrbereich S4 steht der Motor 102 unter Volllast und erreicht eine definierte Drehzahl n_40, bei welcher sich das Wasserfahrzeug 100 mit seiner Höchstgeschwindigkeit bewegt. Sinkt die Drehzahl n unter n_34, wird der Trimmwinkel τ nach dem Modus für den dritten Fahrbereich S3 eingestellt. Alle Drehzahlgrenzen können durch, beispielsweise im Versuch ermittelte, Geschwindigkeitsgrenzen ersetzt werden.

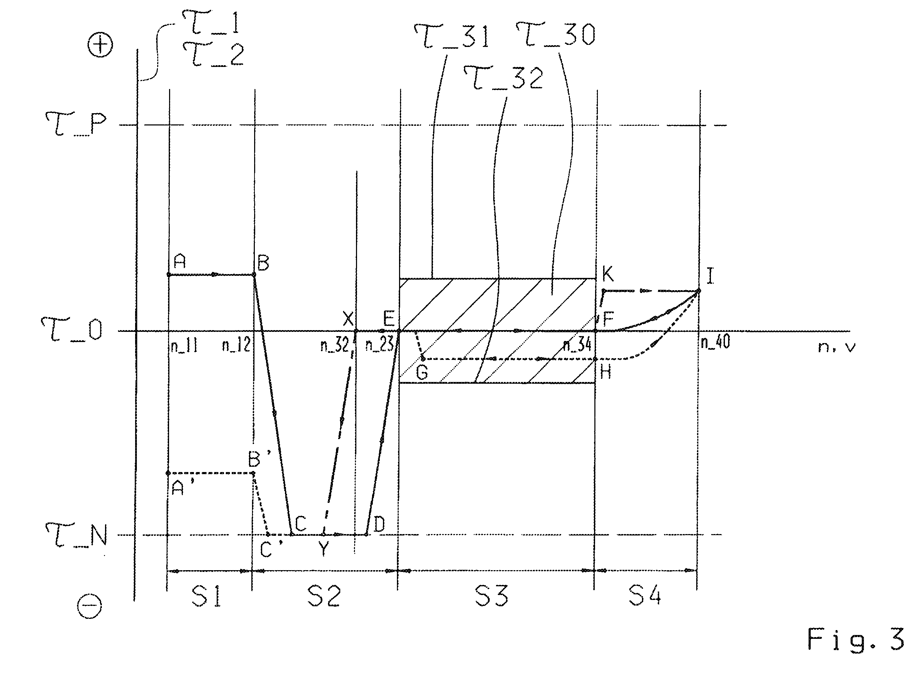

Das Diagramm in Fig. 3 zeigt beispielhaft einen Verlauf des Trimmwinkels τ über der Drehzahl n, bzw. über der sich proportional zur Drehzahl n verhaltenden Geschwindigkeit v. In dem Langsamfahrt-Bereich S1, der ab der Leerlaufdrehzahl n_11 beginnt, ist der Trimmwinkel τ vom Schiffsführer zwischen einer oberen Trimmgrenze τ_P und einer unteren Trimmgrenze τ_N frei wählbar, wie die alternativen Trimmwinkel in Punkt A oder Punkt A' zeigen. Die automatische Trimmung ist in diesem Fahrbereich passiv, d.h. der Trimmwinkel τ wird nicht selbsttätig gesteuert oder geregelt, was jedoch nicht gleichbedeutend mit einer manuellen Betriebsart ist, denn die elektronische Steuerungseinheit 130 erfasst im Hintergrund die Drehzahl n bzw. die Geschwindigkeit v und aktiviert bei dem Überschreiten der Drehzahlgrenze n_12, welche den Langsamfahrt-Bereich S1 nach oben begrenzt, die selbsttätige, gesteuerte Einstellung des Trimmwinkels τ für den zweiten Fahrbereich S2, indem die gemessene Drehzahl n in der elektronischen Steuerungseinheit 130 erfasst und anschließend aus einer gespeicherten Wertetabelle 133 der zugehörige Trimmwinkel τ ermittelt wird. In dem nur als Übergangsbereich zwischen dem Langsamfahrt-Bereich S1 und einem dritten Fahrbereich S3 dienenden zweiten Fahrbereich S2, der in die durch den dritten Fahrbereich S3 beschriebene Gleitphase mündet, ist zum heckseitigen Anheben des Wasserfahrzeugs 100 eine Verstellung des Trimmwinkels τ an die untere Trimmgrenze τ_N erforderlich, welche in Punkt C erreicht wird. In einer zusätzlichen Variante können in dieser Phase die Trimmklappen 114, 115 die Antriebseinheit 140 bei dem heckseitigen Anheben des Wasserfahrzeuges unterstützen. Die Verstellung kann aufgrund der begrenzten Dynamik nicht sprungartig sondern nur mit einem zeitlichen Gradienten erfolgen, wodurch ausgehend von Punkt B der Trimmwinkel τ mit endlicher Verstellgeschwindigkeit mit einem maximalen Gradienten auf den Wert der unteren Trimmgrenze τ_N fällt. Dort bleibt die Antriebseinheit 140 bei zunehmender Fahrt, bis in der elektronischen Steuerungseinheit 130 die Annäherung an den dritten Fahrbereich S3 unter Berücksichtigung des Gradienten berechnet wird. Im Punkt D beginnt die Verstellung des Trimmwinkels τ derart, dass beim Überschreiten der Drehzahlgrenze n_23 die Antriebseinheit 140 die mittlere Lage des Trimmwinkels τ_0, die beispielsweise mit τ_0 =0° definiert wird, erreicht hat. Im dritten Fahrbereich S3 kann der Trimmwinkel τ in einem festgelegten Korrekturbereich τ_30 zwischen einer oberen Korrekturgrenze τ_31 und einer unteren Korrekturgrenze τ_32 beispielsweise zur Anpassung an die Oberflächenverhältnisse angepasst werden (Linie E-G-H).

Bei einer Drehzahlabsenkung im dritten Fahrbereich S3 (Linie E - X) tritt die automatische Betriebsart des zweiten Fahrbereichs S2 erst ab einer Drehzahl n_32, welche kleiner ist als die Drehzahl n_23, in Kraft (Linie E-X-Y). Durch diese Hysterese wird ein ständiges Wechseln der Betriebsarten im Übergangsbereich vermieden.

Wird bei einer Drehzahlsteigerung in dem dritten Fahrbereich S3 die Grenzgeschwindigkeit n_34 überschritten, verharrt der Trimmwinkel τ zunächst auf dem zuletzt in dem dritten Fahrbereich S3 eingestellten Wert (Punkt F oder H). Anschließend wird der Trimmwinkel τ mit der Aktivierung des Betriebsmodus für den vierten Fahrbereich S4 in einem geschlossenen Regelkreis so verändert, dass eine definierte Drehzahl n_40, bzw. maximale Geschwindigkeit v_40, erreicht wird (Punkt I). Bei einer Anordnung von beispielsweise zwei Antriebseinheiten 140, 140' die jeweils von einem eigenen Motor 102, 102' angetrieben sind, werden in dem Fahrbereich, in welchem die Höchstgeschwindigkeit des Wasserfahrzeugs erreicht wird, die Trimmwinkel τ_1, τ_ 2 der beiden Antriebseinheiten 140, 140' unabhängig voneinander verstellt um eine definierte maximale Drehzahl n_40 zu erreichen, wobei die Drehzahlen der einzelnen Antriebseinheiten 140, 140' in der Art geregelt werden, dass sie in einem engen Toleranzbereich von beispielsweise 10 1/min zusammen liegen müssen. Alternativ zu der Regelung der definierten Drehzahl n_40 ist eine Steuerung beider Antriebseinheiten 140, 140' möglich. Hierzu muss für jede Antriebseinheit 140, 140' der Trimmwinkel τ_40, τ_40' im Voraus bekannt sein, mit dem die jeweilige Antriebseinheit 140, 140' in Verbindung mit dem Motor 102, 102' die definierte Drehzahl n_40 erreicht. Dieser Winkel wird beispielsweise in Versuchen ermittelt und dann in der elektronischen Steuerungseinheit 130 einprogrammiert. Übersteigt die Drehzahl nun die Drehzahlgrenze n_34, gibt die elektronische Steuerungseinheit 130 die Werte der Trimmwinkel τ_40, τ_40' an die zentrale Hydraulikeinheit 132 und damit weiter an die jeweilige Trimmaktuatorik 110, 110'. An der jeweiligen Antriebseinheit 140, 140' stellt sich nun gleich bei dem Übergang von dem dritten Fahrbereich S3 zu dem Fahrbereich S4 in dem Punkt K der Trimmwinkel τ_40, τ_40' ein, mit welchem dann auch die zum Erreichen der Höchstgeschwindigkeit v_40 erforderliche definierte Drehzahl n_40 selbsttätig und unabhängig an jeder Antriebseinheit 140, 140' ein.

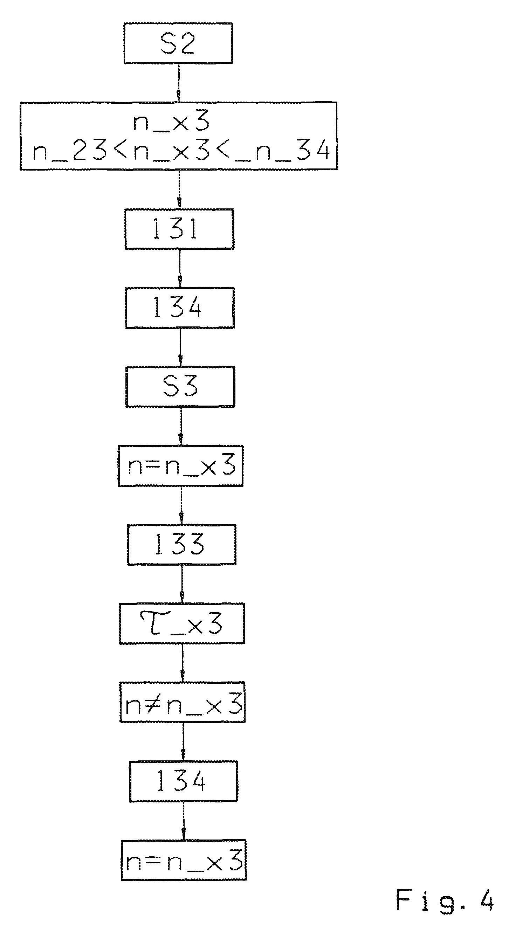

In Fig. 4 zeigt ein Ablaufdiagramm die Steuerung einer Drehzahl für einen Fahrbereich in welchem nicht die Höchstgeschwindigkeit des Wasserfahrzeugs erreicht wird am Beispiel des dritten Farbereiches S3. Ausgehend von einer niedrigeren Drehzahl in dem darunterliegenden zweiten Fahrbereich S2 wird eine gewünschte beliebige Drehzahl n_X3, welche zwischen den Drehzahlgrenzen n_23 und n_34 im dritten Fahrbereich S3 liegt, am Bedienpult 131 eingestellt. Die Motorreglung 134 stellt die tatsächliche Drehzahl n ein, welche mit der gewünschten Drehzahl n_X3 übereinstimmt. In der elektronischen Steuerungseinheit 130 wird die tatsächliche Drehzahl mit den Drehzahlgrenzen n_23 und n_34, welche den dritten Fahrbereich S3 begrenzen, verglichen. Falls diese Bedingung erfüllt ist, gibt die elektronische Steuerungseinheit 130 aus der Wertetabelle 133 den zugehörigen Trimmwinkel τ_X3 an die Trimmaktuatorik 110, 112 aus, woraufhin die Antriebseinheiten 140 einheitlich den Trimmwinkel τ_X3 einnehmen. Augrund der geänderten Eintauchtiefe des Propellers 107 kann sich die Drehzahl n geringfügig ändern, was jedoch durch die Motorreglung 134 ausgeglichen wird und n = n_X3 ist.

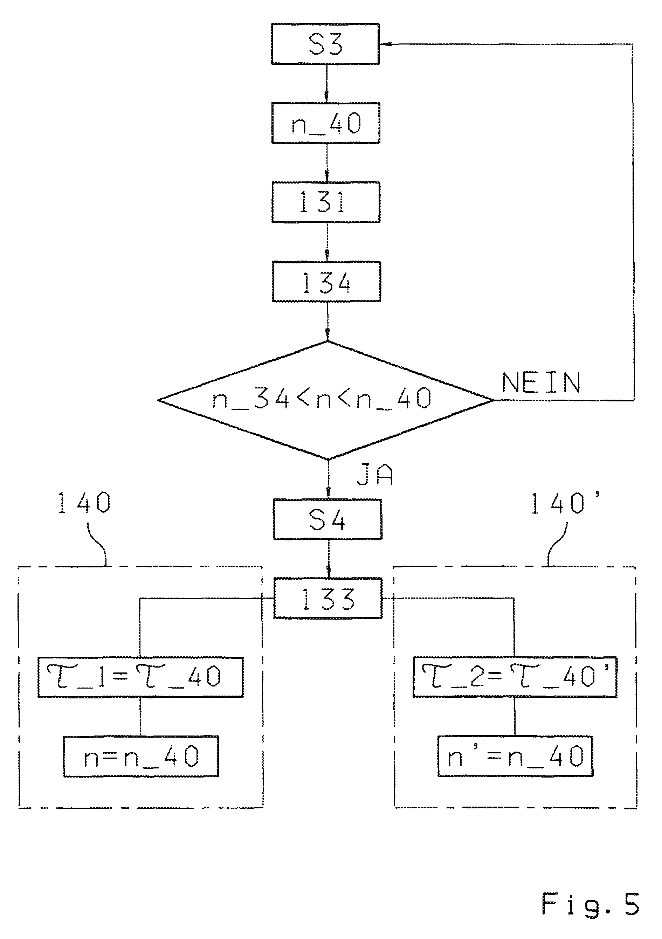

Fig. 5 zeigt in einem Ablaufdiagramm ein Beispiel für die Steuerung der definierten Drehzahl n_40 in dem Fahrbereich in welchem das Wasserfahrzeug seine Höchstgeschwindigkeit erreicht. Ausgehend von einer Drehzahl im dritten Fahrbereich S3 wird die gewünschte, zur Erreichung der Höchstgeschwindigkeit des Wasserfahrzeuges erforderliche, definierte Drehzahl n_40, über das Bedienpult 131, beispielsweise mittels eines Wählhebels, eingegeben und an die Motorreglung 134, welche ein Teil der elektronische Steuerungseinheit 130 ist, weiter gegeben. In der Motorreglung 134 werden die Motorparameter verändert um die definierte Drehzahl n_40 zu erreichen. Da der Übergang zu dem Fahrbereich S4, in welchem das Wasserfahrzeug die Höchstgeschwindigkeit erreicht, nicht mit der zur Einstellung der definierten Drehzahl n_40 erfolgt, sonder bei den identischen Trimmwinkeln τ_1, τ_2, die im dritten Fahrbereich S3 eingestellt wurden, sind die tatsächlichen Drehzahlen n, n' beider Antriebseinheiten 140, 140' kleiner als die gewünschte definierte Drehzahl n_40. In der elektronischen Steuerungseinheit 130 werden die tatsächlichen Drehzahlen n, n' mit der Drehzahlgrenze n_34 verglichen, bei deren Überschreitung aus einer, in der elektronischen Steuerungseinheit 130 gespeicherten, Wertetabelle 133, die für beide Antriebseinheiten 140,140' vorausbestimmten Trimmwinkel τ_40, τ_40' au die jeweilige Antriebseinheit 140,140' ausgegeben und dort eingestellt. Hierdurch gleicht sich die tatsächliche Drehzahl n, n' an die definierte Drehzahl n_40 an.

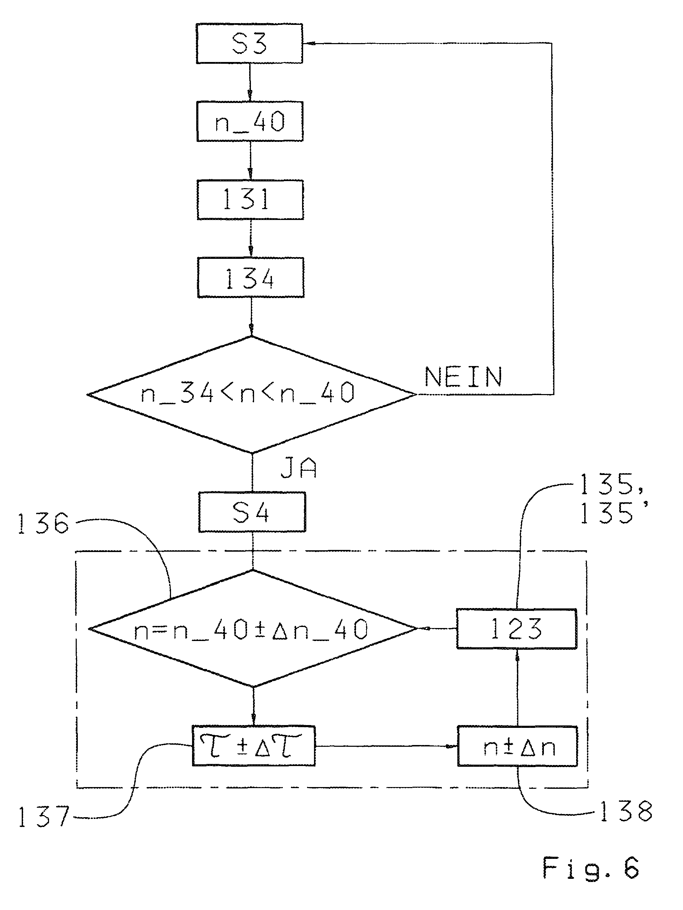

Fig. 6 zeigt in einem Ablaufdiagramm ein Beispiel für die Regelung des Trimmwinkel τ in dem vierten Fahrbereich S4, in welchem das Wasserfahrzeug seine Höchstgeschwindigkeit erreicht. Ausgehend von einer Drehzahl im dritten Fahrbereich S3 wird die gewünschte, zur Erreichung der Höchstgeschwindigkeit des Wasserfahrzeuges erforderliche, definierte Drehzahl n_40 an dem Bedienpult 131 eingegeben und an die Motorsteuerung 134 in der elektronischen Steuerungseinheit 130 weitergeleitet. Die sich daraufhin einstellende tatsächliche Drehzahl n ist kleiner als die gewünschte Drehzahl n_40. In der elektronischen Steuerungseinheit 130 wird die tatsächliche Drehzahl n mit der Drehzahlgrenze n_34 verglichen und bei deren Überschreitung selbsttätig die Betriebsart für den vierten Fahrbereich S4, d.h. die Regelung für die gewünschte Drehzahl n_40 aktiviert. Hierbei wird in einem Regelkreis 135, 135', der für jede Antriebseinheit 140, 140' unabhängig abläuft, durch die Veränderung des als Stellgröße wirkenden Trimmwinkels τ die Drehzahl n, welche die Regelgröße dargestellt, beeinflusst bis sich diese an die als Führungsgröße dienende definierte Drehzahl n_40 annähert. Diese muss bei beiden Antriebseinheiten 140, 140' gleich sein. Wie dargestellt wird im Schritt 136 die Regelgröße Drehzahl n mit der Führungsgröße, der definierten Drehzahl n_40, verglichen. Weicht die Drehzahl n von dieser um eine Regeldifferenz Δn_40 ab, wird im Schritt 137 der als Stellgröße wirkende Trimmwinkel τ um ein Trimmwinkelinkrement Δτ verändert. Hierauf stellt sich im Schritt 138 eine neue, um ein Drehzahlinkrement Δn veränderte Drehzahl n+/-Δn ein, welche von dem Drehzahlsensor 123 erfasst wird und in der elektronischen Steuerungseinheit 130 im Schritt 136 wieder mit der Führungsgröße, der definierten Drehzahl n_40, verglichen wird.

### Bezugszeichen

- 100: Wasserfahrzeug
- 101: Rumpf
- 102: Antriebsmotor
- 102': zweiter Antriebsmotor
- 103: Getriebe
- 104: Heckspiegel
- 105: Schubrohr
- 106: Propellerwelle
- 107: Propeller
- 110: Trimmzylinder
- 111: Gelenkpunkt
- 112: Hubsensor Trimmzylinder
- 114: Trimmklappe rechts
- 115: Trimmklappe links
- 116: Trimmklappenzylinder rechts
- 117: Trimmklappenzylinder links
- 120: Trimmklappensensor rechts
- 121: Trimmklappensensor links
- 123: Drehzahlsensor Propellerwelle
- 124: Schlitzscheibe
- 125: Antriebswelle
- 130: elektronische Steuerungseinheit
- 131: Bedienpult
- 132: zentrale Hydraulikeinheit
- 133: Wertetabelle in der elektronischen Steuerungseinheit 130
- 134: Motorreglung
- 135: Regelkreis für Antriebseinheit 140
- 135': Regelkreis für zweite Antriebseinheit 140'
- 136: Schritt im Regelkreis: Vergleich Regelgröße - Führungsgröße
- 137: Schritt im Regelkreis: Stellgröße
- 138: Schritt im Regelkreis: Regelgröße
- 140: Antriebseinheit
- 140': zweite Antriebseinheit
- 190: Längsachse
- 202: Geschwindigkeitsmesseinrichtung S1 erster Fahrbereich
- S2: zweiter Fahrbereich
- S3: dritter Fahrbereich
- S4: vierter Fahrbereich
- n: Drehzahl
- Δn: Drehzahlinkrement
- n_11: Anfangsdrehzahl von S1
- n_12: Drehzahlgrenze von S1 nach S2
- n_23: Drehzahlgrenze von S2 nach S3
- n_32: Drehzahlgrenze von S3 nach S2 (bei Verzögerung)
- n_34: Drehzahlgrenze von S3 nach S4
- n_40: definierte Drehzahl von S4
- Δn_40: Regeldifferenz
- v: Geschwindigkeit des Wasserfahrzeugs
- v_40: Höchstgeschwindigkeit des Wasserfahrzeugs
- γ: Trimmklappenwinkel, gemeinsam
- γ_R: Trimmklappenwinkel rechts
- γ_L: Trimmklappenwinkellinks
- γ_P: oberer Trimmklappen-Grenzwinkel
- γ_N: unterer Trimmklappen-Grenzwinkel
- γ_0: mittlere Lage des Trimmklappenwinkels
- γ_40: optimaler Trimmklappenwinkel für die maximale Höchstgeschwindigkeit des Wasserfahrzeugs
- τ: Trimmwinkel
- Δτ: Trimmwinkelinkrement
- τ_1: Trimmwinkel der ersten Antriebseinheit 140
- τ_2: Trimmwinkel der ersten Antriebseinheit 140'
- τ_P: obere Trimmgrenze
- τ_N: untere Trimmgrenze
- τ-0: mittlere Lage des Trimmwinkels
- τ_G: Trimmbereich
- τ_30: Korrekturbereich für Trimmung in S3
- τ_31: obere Korrekturgrenze für die Trimmung in S3
- τ_32: untere Korrekturgrenze für die Trimmung in S3
- τ_40: optimaler Trimmwinkel in S4
- τ_40': optimaler Trimmwinkel in S4 für zweite Antriebseinheit 140'
- τ_1: Trimmwinkel bezogen auf die erste Antriebseinheit 140 bei mehreren Antriebseinheiten
- τ_2: Trimmwinkel bezogen auf die zweite Antriebseinheit 140' bei mehreren Antriebseinheiten

## Patentansprüche

1. Verfahren zur Steuerung eines Oberflächenantriebs für ein Wasserfahrzeug (100) mit mindestens zwei von jeweils einem Antriebsmotor (102) angetriebenen Antriebseinheiten (140, 140'), welche sich aus einem die Propellerwelle (106) führenden Schubrohr (105) und einer von einer elektronischen Steuerungseinheit (130) angesteuerten Trimmaktuatorik (110, 112) zusammensetzen, wobei das Schubrohr (105) um einen am Heckspiegel (104) angebrachten Gelenkpunkt (111) senkrecht innerhalb eines Trimmbereichs (τ_G) um einen Trimmwinkel (τ) schwenkbar ist und in dem Gelenkpunkt (111) die Propellerwelle (106) mit einer Antriebswelle (125) gelenkig verbunden ist, und wobei der Oberflächenantrieb in mindestens zwei unterschiedlichen Fahrbereichen betrieben wird, **dadurch gekennzeichnet, dass** in einem Fahrbereich, in welchem eine Höchstgeschwindigkeit (v_40) des Wasserfahrzeugs erreicht wird, die Trimmwinkel (τ_1, τ_2) der Antriebseinheiten (140, 140') zum Erreichen einer definierten Drehzahl (n_40), bei welcher die Höchstgeschwindigkeit (v_40) erreicht wird, selbsttätig und unabhängig voneinander verstellt werden.

2. Verfahren zur Steuerung eines Antriebs für ein Wasserfahrzeug nach Anspruch 1, **dadurch gekennzeichnet, dass** in dem Fahrbereich, in welchem die Höchstgeschwindigkeit des Wasserfahrzeugs (100) erreicht wird, die Trimmwinkel (τ_1, τ_2) der einzelnen Antriebseinheiten (140, 140') selbsttätig in einem geschlossenen Regelkreis unabhängig voneinander so geregelt werden, dass sich an den Antriebseinheiten (140, 140') die definierte Drehzahl (n_40) einstellt.

3. Verfahren zur Steuerung eines Antriebs für ein Wasserfahrzeug nach Anspruch 1, **dadurch gekennzeichnet, dass** in dem Fahrbereich, in welchem die Höchstgeschwindigkeit des Wasserfahrzeugs erreicht wird, selbsttätig und unabhängig voneinander bei jeder Antriebseinheit (140, 140') in der Weise einer Steuerung ein im Voraus bestimmter Trimmwinkel (τ_40) eingestellt wird, bei welchem sich an der jeweiligen Antriebseinheit (140, 140') die definierte Drehzahl (n_40) einstellt.

4. Verfahren zur Steuerung eines Antriebs für ein Wasserfahrzeug nach mindestens einem der vorangegangenen Ansprüche, **dadurch gekennzeichnet, dass** in einem gesteuerten Fahrbereich, in welchem nicht die Höchstgeschwindigkeit erreicht wird, der in Abhängigkeit von einer Drehzahl (n) oder einer Geschwindigkeit (v) einzustellende Trimmwinkel (τ) einer, in der elektronischen Steuerungseinheit (130) abgelegten, Wertetabelle (133) entnommen wird, wobei Zwischenwerte interpoliert werden, oder der Trimmwinkel (τ) aus einer gespeicherten Funktion errechnet wird.

5. Verfahren zur Steuerung eines Antriebs für ein Wasserfahrzeug nach mindestens einem der vorangegangenen Ansprüche, **dadurch gekennzeichnet, dass** neben dem Fahrbereich, in welchem das Wasserfahrzeug die Höchstgeschwindigkeit erreicht, ab einer ersten Drehzahlgrenze (n_11) ein Langsamfahrt-Bereich (S1) für Langsamfahrt vorgesehen ist, in dem die selbsttätige Einstellung des Trimmwinkels (τ) passiv ist, so dass der Trimmwinkel (τ) manuell vom Bootsführer innerhalb des Trimmbereichs (τ_G) beliebig eingestellt wird, und dass die selbsttätige Einstellung des Trimmwinkels (τ) erst beim Verlassen des Langsamfahrt-Bereichs (S1) aktiv wird.

6. Verfahren zur Steuerung eines Antriebs für ein Wasserfahrzeug nach mindestens einem der vorangegangenen Ansprüche, **dadurch gekennzeichnet, dass** der Oberflächenantrieb in vier Fahrbereichen betrieben wird, wobei mit der Erhöhung der Drehzahl (n) im Langsamfahrt-Bereich (S1) ab einer zweiten Drehzahlgrenze (n_12) ein zweiter Fahrbereich (S2), ab einer dritten Drehzahlgrenze (n_23) ein dritter Fahrbereich (S3) und ab einer vierten Drehzahlgrenze (n_34) ein vierter Fahrbereich (S4) folgt, wobei die automatische Trimmung in dem zweiten Fahrbereich (S2) und dem dritten Fahrbereich (S3) gesteuert und in dem vierten Fahrbereich (S4) die Höchstgeschwindigkeit (v_40) des Wasserfahrzeugs erreicht wird.

7. Verfahren zur Steuerung eines Antriebs für ein Wasserfahrzeug nach mindestens einem der vorangegangenen Ansprüche, **dadurch gekennzeichnet, dass** im Langsamfahrt-Bereich (S1), dem zweiten (S2) und dem dritten Fahrbereich (S3), die Trimmwinkel (τ) der einzelnen Antriebseinheiten (140, 140') in gleicher Richtung und um den gleichen Betrag verstellt werden und im zweiten (S2) und dritten (S3) Fahrbereich der Mittelwert der Drehzahlen der einzelnen Antriebseinheiten (140, 140') als Drehzahlsignal zur Steuerung des Trimmwinkels (τ) dient.

8. Verfahren zur Steuerung eines Antriebs für ein Wasserfahrzeug nach mindestens einem der vorangegangenen Ansprüche, wobei das Wasserfahrzeug (100) auf der linken und rechten Seite des Heckspiegels (104) mindestens jeweils eine Trimmklappe (114, 115) aufweist, **dadurch gekennzeichnet, dass** zur Unterstützung der Antriebseinheit (140) die Trimmklappen (114, 115) in der automatischen Betriebsart um einen in Betrag und Richtung gleichen Trimmklappenwinkel (γ) zwischen einem oberen Trimmklappen-Grenzwinkel (γ_P) und einem unteren Trimmklappen-Grenzwinkel (γ_N) verstellt werden.

9. Verfahren zur Steuerung eines Antriebs für ein Wasserfahrzeug nach Anspruch 8, **dadurch gekennzeichnet, dass** in dem Fahrbereich in welchem die Höchstgeschwindigkeit des Wasserfahrzeugs erreicht wird, durch die elektronische Steuerungseinheit selbsttätig ein im Voraus bestimmter Trimmklappenwinkel (γ_40) eingestellt wird, bei welchem vorzugsweise der durch einen Rumpf (101) des Wasserfahrzeugs (100) der Fahrbewegung entgegen gerichtete Widerstand am geringsten ist.

10. Verfahren zur Steuerung eines Antriebs für ein Wasserfahrzeug nach Anspruch 9, **dadurch gekennzeichnet, dass** in dem Fahrbereich in welchem die Höchstgeschwindigkeit des Wasserfahrzeugs erreicht wird, in einem geschlossenen Regelkreis selbsttätig der Trimmklappenwinkel (γ_40) so eingestellt wird, dass die Geschwindigkeit des Wasserfahrzeugs maximal ist (v_40).

## Claims

1. Method for controlling a surface propulsion system for a watercraft (100) having at least two propulsion units (140, 140') which are each driven by a propulsion motor (102) and comprise a thrust tube (105), through which the propeller shaft (106) passes, and a trimming actuator system (110, 112), which is controlled by an electronic control unit (130), wherein the thrust tube (105) can pivot through a trimming angle (τ) about an articulation point (111) which is fitted to the transom panel (104), at right angles within a trimming range (τ_G), and the propeller shaft (106) is connected in an articulated manner to a propulsion shaft (125) at the articulation point (111), and wherein the surface propulsion system is operated in at least two different speed ranges, **characterized in that**, in a speed range in which a maximum speed (v_40) of the watercraft is reached, the trimming angles (τ_1, τ_2) of the propulsion units (140, 140') are adjusted automatically and independently of one another in order to achieve a defined rotation speed (n_40), at which the maximum speed (v_40) is achieved.

2. Method for controlling a propulsion system for a watercraft according to Claim 1, **characterized in that**, in the speed range in which the maximum speed of the watercraft (100) is reached, the trimming angles (τ_1, τ_2) of the individual propulsion units (140, 140') are controlled independently of one another, automatically, in a closed control loop such that the defined rotation speed (n_40) is set at the propulsion units (140, 140').

3. Method for controlling a propulsion system for a watercraft according to Claim 1, **characterized in that**, in the speed range in which the maximum speed of the watercraft is reached, a trimming angle (τ_40), which is determined in advance, is set automatically and independently of one another for each propulsion unit (140, 140') in an open-loop form, at which trimming angle (τ_40) the defined rotation speed (n_40) is set at the respective propulsion unit (140, 140').

4. Method for controlling a propulsion system for a watercraft according to at least one of the preceding claims, **characterized in that**, in a controlled speed range, in which the maximum speed is not reached, the trimming angle (τ), which can be set as a function of a rotation speed (n) or of a vessel speed (v) is taken from a value table (133), which is stored in the electronic control unit (130), with intermediate values being interpolated, or with the trimming angle (τ) being calculated from a stored function.

5. Method for controlling a propulsion system for a watercraft according to at least one of the preceding claims, **characterized in that**, in addition to the speed range in which the watercraft reaches the maximum speed, a slow speed range (S1) is provided for slow speed from a first rotation speed limit (n_11), in which slow speed range (S1) the automatic setting of the trimming angle (τ) is passive, such that the trimming angle (τ) is set as required manually by the helmsman within the trimming range (τ_G), and **in that** the automatic setting of the trimming angle (τ) is active only on leaving the slow speed range (S1).

6. Method for controlling a propulsion system for a watercraft according to at least one of the preceding claims, **characterized in that** the surface propulsion system is operated in four speed ranges, wherein, with the increase in the rotation speed (n) in the slow speed range (S1), a second speed range (S2) follows from a second rotation-speed limit (n_12), a third speed range (S3) follows from a third rotation-speed limit (n_23), and a fourth speed range (S4) follows from a fourth rotation-speed limit (n_34), wherein the automatic trimming is controlled in the second speed range (S2) and in the third speed range (S3), and wherein the maximum speed (v_40) of the watercraft is reached in the fourth speed range (S4).

7. Method for controlling a propulsion system for a watercraft according to at least one of the preceding claims, **characterized in that**, in the slow speed range (S1), the second speed range (S2) and the third speed range (S3), the trimming angles (τ) of the individual propulsion units (140, 140') are adjusted in the same direction and by the same amount, and in the second speed range (S2) and the third speed range (S3), the mean value of the rotation speeds of the individual propulsion units (140, 140') is used as the rotation-speed signal for controlling the trimming angle (τ).

8. Method for controlling a propulsion system for a watercraft according to at least one of the preceding claims, wherein the watercraft (100) has at least one trimming flap (114, 115) in each case on the left-hand side and right-hand side of the transom panel (104), **characterized in that**, in order to assist the propulsion unit (140), the trimming flaps (114, 115) are adjusted in the automatic operating mode through a trimming flap angle (γ), which has the same magnitude and direction, between an upper trimming flap limit value (γ_P) and a lower trimming flap limit angle (γ_N).

9. Method for controlling a propulsion system for a watercraft according to Claim 8, **characterized in that**, in the speed range in which the maximum speed of the watercraft is reached, the electronic control unit automatically sets a trimming flap angle (γ_40) which is determined in advance and at which the drag, which is caused by the hull (101) of the watercraft (100) and is in the opposite direction to the propulsion movement, is preferably least.

10. Method for controlling a propulsion system for a watercraft according to Claim 9, **characterized in that**, in the speed range in which the maximum speed of the watercraft is reached, the trimming flap angle (γ_40) is set automatically in a closed control loop such that the propulsion speed of the watercraft is a maximum (v_40).

## Revendications

1. Procédé de commande de l'entraînement de surface d'un bateau (100) qui présente
au moins deux unités d'entraînement (140, 140') entraînées chacune par un moteur d'entraînement (102) et qui sont constituées d'un tube de poussée (105) qui guide l'arbre d'hélice (106) et d'un ensemble (110, 112) d'actionneurs d'assiette commandé par une unité électronique de commande (130),
le tube de poussée (105) pouvant pivoter verticalement autour d'un point d'articulation (111) installé sur le panneau arrière (104) d'un angle d'assiette (τ) situé à l'intérieur d'une plage d'assiette (τ_G) et l'arbre d'hélice (106) étant relié de manière articulée à un arbre d'entraînement (125) au point d'articulation (111),
l'entraînement de surface étant conduit en au moins deux plages de conduite différentes,
**caractérisé en ce que**
dans une plage de conduite dans laquelle la vitesse la plus élevée (v_40) du bateau est atteinte, les angles d'assiette (τ_1, τ_2) des unités d'entraînement (140, 140') sont réglés automatiquement et indépendamment l'un de l'autre pour atteindre une vitesse de rotation (n_40) définie à laquelle la vitesse la plus élevée (v_40) est atteinte.

2. Procédé de commande d'un entraînement pour un bateau selon la revendication 1, **caractérisé en ce que** dans la plage de conduite dans laquelle la vitesse la plus élevée du bateau (100) est atteinte, les angles d'assiette (τ_1, τ_2) des différentes unités d'entraînement (140, 140') sont régulés automatiquement et indépendamment l'un de l'autre dans une boucle de régulation fermée de telle sorte que la vitesse de rotation (n_40) définie s'établisse sur les unités d'entraînement (140, 140').

3. Procédé de commande d'un entraînement pour un bateau selon la revendication 1, **caractérisé en ce que** dans la plage de conduite dans laquelle la vitesse la plus élevée du bateau est atteinte, un angle d'assiette (τ-40) défini à l'avance et pour lequel la vitesse de rotation (n_40) définie s'établit sur chaque unité d'entraînement (140, 140') est réglé automatiquement et indépendamment pour chaque unité d'entraînement (140, 140') à la manière d'une commande.

4. Procédé de commande d'un entraînement pour un bateau selon au moins l'une des revendications précédentes, **caractérisé en ce que** dans une plage de conduite contrôlée dans laquelle la vitesse la plus élevée n'est pas atteinte, l'angle d'assiette (τ) qui doit être réglé en fonction d'une vitesse de rotation (n) ou d'une vitesse (v) est prélevé dans un tableau (133) de valeurs conservé dans l'unité électronique de commande (130) en interpolant les valeurs intermédiaires, ou l'angle d'assiette (τ) est calculé à partir d'une fonction conservée en mémoire.

5. Procédé de commande d'un entraînement pour un bateau selon au moins l'une des revendications précédentes, **caractérisé en ce qu'**en plus de la plage de conduite dans laquelle le bateau atteint la vitesse la plus élevée, il prévoit à partir d'une première limite de vitesse de rotation (n_11) une plage de déplacement lent (S1) pour un déplacement lent dans lequel l'établissement automatique de l'angle d'assiette (τ) est passif de sorte que l'angle d'assiette (τ) est réglé de manière quelconque et manuellement par le pilote du bateau à l'intérieur de la plage d'assiette (τ_G) et **en ce que** le réglage automatique de l'angle d'assiette (τ) n'est activé qu'après que la plage de déplacement lent (S1) a été quittée.

6. Procédé de commande d'un entraînement pour un bateau selon au moins l'une des revendications précédentes, **caractérisé en ce que** l'entraînement de surface est géré en quatre plages de conduite dans lesquelles, lors d'une augmentation de la vitesse de rotation (n), une deuxième plage de conduite (S2) suit la plage de déplacement lent (S1) à partir d'une deuxième limite (n_12) de vitesse de rotation, avec ensuite une troisième plage de conduite (S3) à partir d'une troisième limite de vitesse de rotation (n_23) et une quatrième plage de conduite (S4) à partir d'une quatrième limite de vitesse de rotation (n_34), le réglage automatique de l'assiette dans la deuxième plage de conduite (S2) et la troisième plage de conduite (S3) étant commandé et la vitesse la plus élevée (v_40) du bateau étant atteinte dans la quatrième plage de conduite (S4).

7. Procédé de commande d'un entraînement pour un bateau selon au moins l'une des revendications précédentes, **caractérisé en ce que** dans la plage de déplacement lent (S1), la deuxième plage de conduite (S2) et la troisième plage de conduite (S3), l'angle d'assiette (τ) des différentes unités d'entraînement (140, 140') est réglé dans la même direction et au même niveau et **en ce que** dans la deuxième plage de conduite (S2) et la troisième plage de conduite (S3), la valeur moyenne des vitesses de rotation des différentes unités d'entraînement (140, 140') sert de signal de vitesse de rotation pour la commande de l'angle d'assiette (τ).

8. Procédé de commande d'un entraînement pour un bateau selon au moins l'une des revendications précédentes, dans lequel le bateau (100) présente au moins un clapet d'assiette (114, 115) sur le côté gauche et un autre sur le côté droit du panneau arrière (104), **caractérisé en ce que** pour soutenir l'unité d'entraînement (140), les clapets d'assiette (114, 115) sont déplacés en mode de conduite automatique sur des angles (γ) de clapet d'assiette de même niveau et de même direction entre un angle limite supérieur de clapet d'assiette (γ_P) et un angle limite inférieur de clapet d'assiette (γ_N).

9. Procédé de commande d'un entraînement pour un bateau selon la revendication 8, **caractérisé en ce que** dans la plage de conduite dans laquelle la vitesse la plus élevée du bateau est atteinte, un angle de clapet d'assiette (γ_40) défini à l'avance et auquel la résistance orientée en opposition au déplacement et exercée par la proue (101) du bateau (100) est de préférence la plus petite est réglé automatiquement par l'unité électronique de commande.

10. Procédé de commande d'un entraînement pour un bateau selon la revendication 9, **caractérisé en ce que** dans la plage de conduite dans laquelle la vitesse la plus élevée du bateau est atteinte, l'angle de clapet d'assiette (γ_40) est réglé automatiquement dans une boucle de régulation fermée de telle sorte que la vitesse du bateau soit maximale (v_40).
